# EUROPÄISCHE PATENTSCHRIFT

(11) **EP 2 401 203 B1**
(45) Veröffentlichungstag und Bekanntmachung des Hinweises auf die Patenterteilung: **13.02.2013**
(21) Anmeldenummer: 10705825.7
(22) Anmeldetag: 24.02.2010
(51) Int. Cl.: B64D 41/00

(54) **LEISTUNGSERZEUGUNGS-SYSTEM ZUR INTEGRATION IN EIN FLUGZEUGSYSTEM**
POWER GENERATING SYSTEM FOR INTEGRATION INTO AN AIRCRAFT SYSTEM
SYSTÈME DE GÉNÉRATION D'ÉNERGIE DESTINÉ À ÊTRE INTÉGRÉ DANS UN SYSTÈME DE BORD

(30) Priorität: 24.02.2009 US 154990 P; 24.02.2009 DE 102009010243
(43) Veröffentlichungstag der Anmeldung: 04.01.2012
(73) Patentinhaber: Airbus Operations GmbH, 21129 Hamburg (DE)
(72) Erfinder: GATZKE, Sten, 27321 Emtinghausen (DE)
(74) Vertreter: Schatt, Markus F.
(86) Internationale Anmeldenummer: PCT/EP2010/001151
(87) Internationale Veröffentlichungsnummer: WO 2010/097213

(56) Entgegenhaltungen:
- EP-A2- 1 767 455
- DE-A1-102006 003 138
- DE-B- 1 032 033
- US-B1- 7 222 819

## Beschreibung

Die Erfindung betrifft ein Leistungserzeugungs-System zur Integration in ein Flugzeugsystem.

Die DE 10 2006 003138 A1 beschreibt ein Notversorgungsaggregat mit einer durch einen Luftstrom antreibbaren Staudruckturbine und mit einem von dieser antreibbaren Energiewandler zur zumindest teilweisen Aufrechterhaltung der Funktion eines hydraulischen und/oder elektrischen Systems an Bord eines Flugzeugs in einer Notfallsituation.

Aus dem allgemeinen Stand der Technik sind Flugzeuge mit einer Notstrom-Erzeugungsvorrichtung oder allgemein einer Sicherheits-Leistungserzeugungsvorrichtung bekannt, die einen Halter und einen an dessen Ende angebrachten Propeller zur Gewinnung von elektrischer Energie aufweist. Solche Geräte werden auch als Ram Air Turbine bezeichnet. Der Halter ist ausklappbar im Rumpf oder in einem Tragflügel des Flugzeugs eingebaut und befindet sich im normalen Betrieb des Flugzeugs in eingefahrenem Zustand. In einer Notsituation mit einem Abfall der verfügbaren Energie kann der Halter mit dem Propeller zur Erzeugung von Energie ausgefahren werden.

Aus dem allgemeinen Stand der Technik sind Flugzeuge mit einer Hilfsenergie-Erzeugungsvorrichtung (APU) bekannt, die eine Kombination einer Turbine und eines Generators zur Erzeugung von Strom ist, z.B. zur Versorgung von Flugzeugsystemen beim Stehen des Flugzeugs am Boden und optional zum Erzeugen von Druckluft zum Anlassen der Triebwerke. Dazu ist eine Turbine der Hilfsenergie-Erzeugungsvorrichtung in einem Strömungskanal zwischen einem Lufteinlaufkanal und einem Abgaskanal in der Heckspitze gelagert.

Aus der DE 10 2006 003 138 A1 ist ein Leistungsversorgungs-System zur Integration in ein Flugzeugsystem bekannt, das eine Sicherheits-Leistungsversorgungsvorrichtung in Form eines Notversorgungsaggregats aufweist. Zwischen zwei Öffnungen am Rumpf des Flugzeugs verläuft ein Kanal mit einer in der Flugzeuglängsrichtung gesehen vorderen Öffnung und einer hinteren Öffnung. In dem Kanal ist eine Turbine angeordnet, an der ein Generator angekoppelt ist. An der vorderen Öffnung ist eine mittels einer elektromechanisch betätigbaren Öffnungs- und Schließvorrichtung zwischen einer geschlossenen und einer offenen Stellung bewegbare Abdeckungsvorrichtung zur Abdeckung der Öffnung in der geschlossenen Stellung der Abdeckungsvorrichtung vorgesehen. Dazu ist die Betätigungsvorrichtung zur Erzeugung eines Öffnungs- oder Schließsignals funktional mit der Öffnungs- und Schließvorrichtung verbunden.

Die Druckschrift US 6 272 838 B1, die Druckschrift EP 1 767 455 A2, die Druckschrift US 6 247 668 B1 und die Druckschrift US 7 222 819 B1 beschreiben jeweils Steuerungen für die Einlassklappe einer APU.

GB 2419640 beschreibt eine APU, die dazu vorgesehen ist, im Flug z.B. bei "engineout condition" zeitweise Energie zu erzeugen. Dazu ist die APU in einer Leitung angeordnet, in die über einen Einlass, der von einer Klappe geschlossen und geöffnet werden kann, zum Antrieb der APU Stauluft eindringen kann.

Die Aufgabe der Erfindung ist, ein Leistungsversorgungs-System zur Integration in ein Flugzeug-System bereitzustellen, mit dem unter optimaler Ausnutzung von Ressourcen eine ausreichende Sicherheit bei der Bereitstellung von Leistung zum Betreiben von Verbrauchern gewährleistet wird.

Diese Aufgabe wird mit den Merkmalen des Patentanspruchs 1 gelöst. Weitere Ausführungsformen sind in den auf diesen rückbezogenen Unteransprüchen angegeben.

Das Leistungserzeugungs-System kann insbesondere als ein Primär-Leistungserzeugungssystem oder als ein Sicherheits-Leistungssystem ausgeführt sein.

Erfindungsgemäß ist insbesondere ein Leistungsversorgungs-System zur Integration in ein Flugzeugsystem vorgesehen, das aufweist:
■ eine Sicherheits-Leistungsversorgungsvorrichtung, aufweisend: einen zwischen zwei Öffnungen am Rumpf des Flugzeugs verlaufenden Kanal mit einer in der Flugzeugslängsrichtung gesehen vorderen und einer hinteren Öffnung, eine in dem Kanal angeordnete Turbine mit einem an dieser angekoppelten Generator, eine zwischen einer geschlossenen und einer offenen Stellung bewegbare Abdeckungsvorrichtung zur Abdeckung der vorderen Öffnung in deren geschlossener Stellung, eine Öffnungs- und Schließvorrichtung und eine Entriegelungsvorrichtung, die der Abdeckungsvorrichtung zugeordnet ist und die derart ausgeführt ist, dass diese die Abdeckungsvorrichtung verriegelt, wenn dieser ein Strom mit einer ersten Signalstärke oder Stromstärke zugeführt wird, und die Abdeckungsvorrichtung entriegelt, wenn dieser ein Strom mit einer zweiten Signalstärke oder Stromstärke zugeführt wird, wobei die zweite Signalstärke die erste Signalstärke um mindestens einen vorbestimmten Wert unterschreitet,
■ zumindest eine mit der Öffnungs- und Schließvorrichtung funktional verbundene Betätigungsvorrichtung zur Erzeugung eines Öffnungs- oder Schließsignals für dieselbe,
■ eine mit einer Leistungserzeugungs-Überwachungsvorrichtung funktional gekoppelte Öffnungs-Schaltvorrichtung, die mit einer Steuerleitung mit der Entriegelungsvorrichtung funktional verbunden und die derart ausgeführt ist, dass diese in einem Ausgangszustand die Entriegelungsvorrichtung elektrisch mit einer ersten Signalstärke ansteuert, bei der diese Abdeckungsvorrichtung verriegelt, und dass diese auf ein von der Leistungserzeugungs-Überwachungsvorrichtung empfangenes Leistungsanforderungssignal die Entriegelungsvorrichtung elektrisch mit der zweiten Signalstärke ansteuert, bei der diese die Abdeckungsvorrichtung entriegelt.

Nach einer Ausführungsform des erfindungsgemäßen Leistungsversorgungs-Systems ist die Entriegelungsvorrichtung derart ausgeführt, dass diese elektromagnetisch betätigbar ist.

Die Abdeckungsvorrichtung kann als Deckel ausgeführt sein, der am Rumpf mittels eines Gelenks derart angelenkt ist, dass das Gelenk an der in der Längsrichtung des Flugzeugs gesehen hinteren Seite der Öffnung gelegen ist. Der Deckel kann derart ausgeführt sein, dass die Windkräfte im Flug den Deckel gegen die Haltekräfte der ersten bzw. zweiten Öffnungs- und Schließvorrichtung in den offenen Zustand drücken.

Die zumindest eine Betätigungsvorrichtung kann insbesondere manuell betätigbar ausgeführt sein, wobei diese zur Erzeugung eines Öffnungs- oder Schließsignals bei manueller Betätigung derselben mit jeweils einer Verbindungsleitung mit den elektromechanisch betätigbaren Öffnungs- und Schließvorrichtungen in Verbindung steht.

Die Entriegelungsvorrichtung kann eine Vorspanneinrichtung aufweisen, welche die Abdeckungsvorrichtung in ihre offene Stellung vorspannt, wenn sich diese in ihrem entriegelten Zustand befindet. Die Entriegelungsvorrichtung kann eine pyrotechnische Vorrichtung aufweisen, die mit der Öffnungs-Schaltvorrichtung über die Steuerleitung funktional verbunden und derart ausgeführt ist, dass diese ausgelöst wird, wenn diese die Entriegelungsvorrichtung elektrisch mit der zweiten Signalstärke ansteuert. Die pyrotechnische Vorrichtung kann einen Gasgenerator oder eine Sprengvorrichtung aufweisen. Bei der Ausführung der Entriegelungsvorrichtung mit einer pyrotechnischen Vorrichtung bleibt bei der Auslösung derselben die Entriegelungsvorrichtung gelöst. Falls diese Situation im Flugbetrieb auftritt, wird die Abdeckungsvorrichtung im Flug nicht mehr geschlossen wird. Dabei kann die zweite Signalstärke an eine Notfallsituation gekoppelt sein, bei der die Öffnung der Abdeckungsvorrichtung mit großer Zuverlässigkeit erfolgen soll. Das Schließen der Abdeckungsvorrichtung erfolgt dann am Boden von Hand mit einem Laden der pyrotechnische Vorrichtung.

Nach einem Ausführungsform der Erfindung kann die hintere Öffnung des Kanals durch eine Ausmündung am Heck des Flugzeugrumpfs gebildet sein.

Nach einem weiteren Ausführungsform der Erfindung kann im Heck des Flugzeugs eine Hilfsturbine eingebaut sein, die zwischen einer Einlassleitung mit einer Einlassöffnung am Rumpf und einer Auslassleitung gelegen ist, wobei die Auslassleitung innerhalb des Heckbereichs des Rumpfs mit dem zweiten Kanalabschnitt mittels eines Kopplungsabschnitts zusammengeführt ist, so dass die zweite Öffnung des zweiten Kanalabschnitts die Ausmündung der Auslassleitung ist.

Nach einem Ausführungsform der Erfindung ist insbesondere vorgesehen,
■ dass an der hinteren Öffnung eine zweite zwischen einer geschlossenen und einer offenen Stellung bewegbare Abdeckungsvorrichtung zur Abdeckung derselben in der geschlossenen Stellung angeordnet ist, dass der Abdeckungsvorrichtung eine zweite Öffnungs- und Schließvorrichtung und eine zweite Entriegelungsvorrichtung zugeordnet sind, die der Abdeckungsvorrichtung zugeordnet ist und die derart ausgeführt ist, dass diese die Abdeckungsvorrichtung verriegelt, wenn dieser ein Strom mit einer ersten Stromstärke zugeführt wird, und die Abdeckungsvorrichtung entriegelt, wenn dieser ein Strom mit einer zweiten Stromstärke zugeführt wird, wobei die zweite Signalstärke die erste Signalstärke um mindestens einen vorbestimmten Wert unterschreitet,
■ dass das Leistungsversorgungs-System zumindest eine Betätigungsvorrichtung zur Erzeugung eines Öffnungs- oder Schließsignals für die zweite Öffnungs- und Schließvorrichtung aufweist, die der zweiten Abdeckungsvorrichtung zugeordnet ist,
■ dass die Öffnungs-Schaltvorrichtung funktional über eine Steuerleitung mit der zweiten Entriegelungsvorrichtung gekoppelt und derart ausgeführt ist, dass diese in einem Ausgangszustand die zweite Entriegelungsvorrichtung elektrisch mit einer ersten Signalstärke ansteuert, bei der diese Abdeckungsvorrichtung verriegelt, und dass diese auf ein von der Leistungserzeugungs-Überwachungsvorrichtung empfangenes Leistungsanforderungssignal die zweite Entriegelungsvorrichtung elektrisch mit der zweiten Signalstärke ansteuert, bei der diese die Abdeckungsvorrichtung entriegelt.

Bei dieser Ausführungsform des erfindungsgemäßen Leistungsversorgungs-Systems kann die Entriegelungsvorrichtung derart ausgeführt sein, dass diese elektromagnetisch betätigbar ist.

Dabei kann vorgesehen sein, dass die zweite Abdeckungsvorrichtung einen Deckel aufweist, der mittels eines Drehgelenks derart angeordnet ist, dass der Deckel die zweite Öffnung abdeckt, wenn sich der Deckel in seiner geschlossenen Stellung befindet, und dass das Drehgelenk auf einer Seite gelegen ist, die in der angenommenen Strömungsrichtung der den Rumpf umströmenden Luft gesehen die hintere Seite der Öffnung bildet, so dass in der offenen Stellung des zweiten Deckels die Innenseite desselben der Strömung abgewandt ist. Der Deckel kann derart ausgeführt sein, dass die Windkräfte im Flug den Deckel gegen die Haltekräfte der ersten bzw. zweiten Öffnungs- und Schließvorrichtung in den offenen Zustand drücken.

Nach einer Ausführungsform des erfindungsgemäßen Leistungsversorgungs-Systems ist die Abdeckungsvorrichtung als Deckel ausgeführt, der am Rumpf mittels eines Gelenks derart angelenkt ist, dass das Gelenk an der in der Längrichtung des Flugzeugs gesehen hinteren Seite der Öffnung gelegen ist und der Deckel derart ausgeführt ist, dass die Windkräfte im Flug die den Deckel gegen die Haltekräfte der zweiten Öffnungs- und Schließvorrichtung in den offenen Zustand drücken.

Generell kann die zumindest eine Betätigungsvorrichtung manuell betätigbar ausgeführt sein, wobei diese zur Erzeugung eines Öffnungs- oder Schließsignals bei der manuellen Betätigung derselben mit einer Verbindungsleitung mit der Öffnungs- und Schließvorrichtung in Verbindung steht.

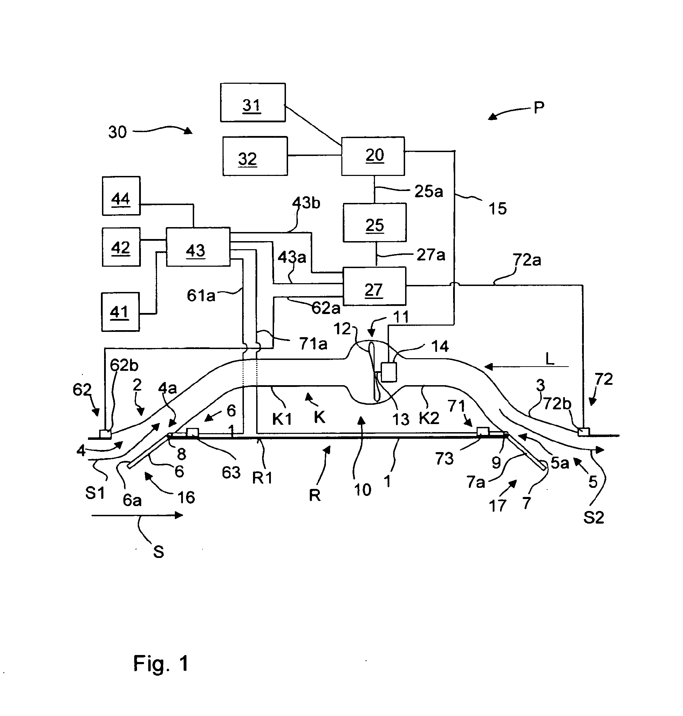

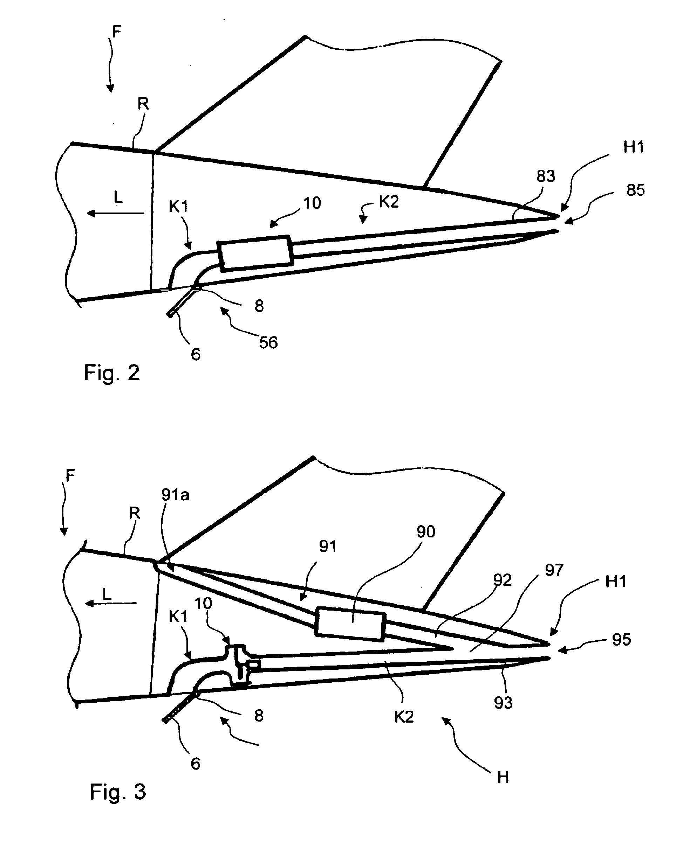

Im Folgenden werden Ausführungsformen der Erfindung an Hand der beigefügten Figuren beschrieben, die zeigen:
■ Figur 1 eine schematische Schnittdarstellung eines Seitenrandabschnitts eines Flugzeugrumpfes mit einer schematischen Funktionsdarstellung einer Ausführungsform der Erfindung mit elektromechanisch betätigbaren Öffnungs- und Schließvorrichtungen und elektromagnetisch betätigbaren Entriegelungsvorrichtungen;
■ Figur 2 eine schematische Darstellung eines Schnitts durch ein Heck-Bauteil mit einer ersten Ausführungsform für die Integration einer Hilfsenergie-Erzeugungsvorrichtung in das Heck-Bauteil, in der die Öffnungs- und Schließvorrichtungen und Entriegelungsvorrichtungen nicht dargestellt sind; und
■ Figur 3 eine schematische Darstellung eines Schnitts durch ein Heck-Bauteil mit einer zweiten Ausführungsform für die Integration einer Hilfsenergie-Erzeugungsvorrichtung in das Heck-Bauteil, in der die Öffnungs- und Schließvorrichtungen und Entriegelungsvorrichtungen nicht dargestellt sind.

Die Figur 1 zeigt schematisch einen Schnitt entlang eines Abschnitts der Rumpfschale 1 des Rumpfes R eines Flugzeugs F zusammen mit Funktionen einer Ausführungsform des erfindungsgemäßen Leistungsversorgungssystems P. In den Rumpf R ist ein Strömungskanal K integriert, der aus einem ersten Abschnitt K1 mit einem Einmündungsabschnitt 2 und einem zweiten Abschnitt K2 mit einem Ausmündungsabschnitt 3 gebildet ist. Der Ausmündungsabschnitt 3 ist in der Flugzeuglängsrichtung L gesehen hinter dem Einmündungsabschnitt 2 gelegen. An der Stelle, an der der Einmündungsabschnitt 2 in den Rumpf R einmündet, ist in dem Rumpf R eine Einmündungsöffnung oder eine erste Öffnung 4 ausgebildet. In analoger Weise ist an der Stelle, an der der Ausmündungsabschnitt 3 in den Rumpf R ausmündet, in dem Rumpf R eine Ausmündungsöffnung oder eine zweite Öffnung 5 ausgebildet.

An der ersten Öffnung 4 ist eine erste Abdeckungsvorrichtung 6 angeordnet, die insbesondere einen ersten Deckel 16 aufweisen kann, der mittels eines Drehgelenks 8 derart gestaltet und angeordnet ist, dass der erste Deckel 16 die erste Öffnung 4 abdeckt, wenn sich der erste Deckel 16 in seiner geschlossenen Stellung befindet, und dass sich der erste Deckel 16 zu derjenigen Seite 4a der ersten Öffnung 4 hin öffnet bzw. dass das Drehgelenk 8 auf einer Seite gelegen ist, die in der angenommenen Strömungsrichtung S der den Rumpf R umströmenden Luft gesehen die hintere Seite der ersten Öffnung 4 bildet. Der erste Deckel 16 öffnet sich also in einer Weise, dass in der offenen Stellung des ersten Deckels 16 die Innenseite 16a desselben der Strömung S zugewandt ist. Die Innenseite 16a dient in diesem Zustand als Wand zum Einleiten der entlang der Rumpfaußenseite R1 und an der Öffnung 4 auftretenden Strömung S1 in den ersten Kanalabschnitt K1. Alternativ dazu kann die erste Abdeckungsvorrichtung auch aus einem Schieber gebildet sein.

In analoger Weise ist bei der dargestellten Ausführungsform an der zweiten Öffnung 5 ist eine zweite Abdeckungsvorrichtung 7 angeordnet, die insbesondere einen zweiten Deckel 17 aufweisen kann. Nach einer Ausführungsform der Erfindung ist in analoger Weise mittels eines Drehgelenks 9 die zweite Abdeckungsvorrichtung 7 derart gestaltet und angeordnet, dass der zweite Deckel 17 die zweite Öffnung 5 abdeckt, wenn sich der zweite Deckel 17 in seiner geschlossenen Stellung befindet, und dass sich der zweite Deckel 17 zu derjenigen Seite 5a der zweiten Öffnung 5 hin öffnet bzw. dass das Drehgelenk 9 auf einer Seite gelegen ist, die in der angenommenen Strömungsrichtung S der den Rumpf R umströmenden Luft gesehen die vordere Seite der zweiten Öffnung 5 bildet. Der zweite Deckel 17 öffnet sich also in einer Weise, dass in der offenen Stellung des zweiten Deckels 17 die Innenseite 17a desselben der durch die zweite Öffnung 5 ausströmenden Luft S2 zugewandt und die Außenseite 17b desselben der den Rumpf umströmenden Strömung S zugewandt ist. Der Deckel 17 unterstützt also in seiner offenen Stellung das Ausströmen von Luft aus dem zweiten Kanalabschnitt K2. Alternativ dazu kann die zweite Abdeckungsvorrichtung auch aus einem Schieber gebildet sein.

Nach einer weiteren Ausführungsform der Erfindung kann die zweite Abdeckungsvorrichtung 7 derart ausgeführt sein, dass diese einen zweiten Deckel 17 aufweisen kann, der mittels eines Drehgelenks 9 derart gestaltet und angeordnet ist, dass der Deckel 17 die zweite Öffnung 5 abdeckt, wenn sich der Deckel 17 in seiner geschlossenen Stellung befindet, und dass sich der Deckel 17 zu derjenigen Seite der Öffnung 5 hin öffnet bzw. dass das Drehgelenk 9 auf einer Seite gelegen ist, die in der angenommenen Strömungsrichtung S der den Rumpf R umströmenden Luft gesehen die hintere Seite der Öffnung 5 bildet. Der zweite Deckel 17 öffnet sich also in der Weise, dass in der offenen Stellung des zweiten Deckels 17 die Innenseite 5a desselben der Strömung S zugewandt ist.

Alternativ kann vorgesehen sein, dass an der zweiten Öffnung 5 keine Abdeckungsvorrichtung oder keine derartige Abdeckungsvorrichtung angeordnet ist. Zwischen dem ersten Abschnitt K1 und dem zweiten Abschnitt K2 ist eine Sicherheits-Leistungserzeugungsvorrichtung 10 als Teil des Leistungsversorgungssystems P integriert. Die Sicherheits-Leistungserzeugungsvorrichtung 10 weist ein Turbinengehäuse 11, eine Turbine 12 und einen an diese über eine entsprechende Drehachse 13 gekoppelten Generator 14 auf. Wenn sich in einer Notversorgungs-Betriebsart der erste Deckel 16 und der zweite Deckel 17 in ihrer offenen Stellung befinden, strömt Luft durch das Turbinengehäuse 11 und treibt dadurch die Turbine 12 und infolgedessen den Generator 14 an. Die in der Notversorgungs-Betriebsart dadurch erzeugte Leistung wird über eine elektrische Leitung 15 dem Leistungsversorgungssystem P und nach einer Ausführungsform der Erfindung einer Leistungsverteilungs-Vorrichtung 20 des Leistungsversorgungssystems P zugeführt.

Die optional als Bestandteil des Leistungsversorgungssystems P vorgesehene Leistungsverteilungs-Vorrichtung 20 ist funktional mit Primärleistungserzeugungs-Vorrichtungen 31, 32 und mit der Sicherheits-Leistungsversorgungsvorrichtung 10 gekoppelt, um die von diesen jeweils erzeugten Leistungen zu empfangen und daraus eine Soll-Abgabeleistung an Verbraucher des Flugzeugsystems auszugeben.

In der Primärversorgungs-Betriebsart erzeugt zumindest eine Primärleistungserzeugungs-Vorrichtung oder mehrere Primärleistungserzeugungs-Vorrichtungen 31, 32 eines Primär-Leistungserzeugungssystems 30 des Flugzeugssystems elektrische Leistung. Bei einer Ausführungsform der Erfindung weist die eine Primärleistungserzeugungs-Vorrichtung oder weisen die Primärleistungserzeugungs-Vorrichtungen 31, 32 jeweils zumindest einen Generator auf, der an eine Ausgangswelle eines Triebwerks gekoppelt ist.

Das erfindungsgemäße Leistungsversorgungssystem P weist neben der Leistungsverteilungs-Vorrichtung 20 weiterhin eine mit dieser über eine Leitung 25a funktional gekoppelte Leistungserzeugungs-Überwachungsvorrichtung 25 und eine mit dieser über eine Leitung 27a funktional gekoppelte Öffnungs-Schaltvorrichtung 27 auf.

Weiterhin weist das erfindungsgemäße Leistungsversorgungssystem P zumindest eine Betätigungsvorrichtung 41, 42 auf, die jeweils mit einer Ansteuerungsvorrichtung 43 gekoppelt sind. In der in der Figur 1 dargestellten Ausführungsform des Leistungsversorgungssystems P sind zwei Betätigungsvorrichtungen 41, 42 vorgesehen. Mit der Ansteuerungsvorrichtung 43 ist weiterhin das Flugsteuerungssystem 44 funktional gekoppelt.

Mit dem ersten Deckel 16 wirken eine erste Öffnungs- und Schließvorrichtung 61 und eine erste Entriegelungsvorrichtung 62 zusammen. Ebenso wirken mit dem zweiten Deckel 17 eine zweite Öffnungs- und Schließvorrichtung 71 und eine zweite Entriegelungsvorrichtung 72 zusammen. Die Öffnungs- und Schließvorrichtungen 61, 71 sind beide über jeweils eine Signalleitung 61a bzw. 71a funktional mit der Ansteuerungsvorrichtung 43 verbunden. Die Öffnungs- und Schließvorrichtungen 61, 71 sind vorzugsweise jeweils als elektromechanische Entriegelungsvorrichtungen ausgeführt und weisen jeweils einen elektromechanischen Stellantrieb 63, 73 auf.

Die Öffnungs- und Schließvorrichtungen 61, 71 werden aufgrund eines entsprechenden von der Ansteuerungsvorrichtung 43 erzeugten Kommandosignals derart betätigt, dass der jeweilige Deckel 16 bzw. 17 geöffnet oder geschlossen werden kann. Dieses Kommandosignal wird durch die Ansteuerungsvorrichtung 43 aufgrund von Betätigungskommandos, die von einer Betätigungsvorrichtung an die Ansteuerungsvorrichtung 43 gesendet werden, erzeugt, wenn die von dem Flugsteuerungssystem 44 an die Ansteuerungsvorrichtung 43 gesendeten Daten diese zulassen. Zu diesem Zweck kann die Ansteuerungsvorrichtung 43 eine Überwachungsfunktion mit einer Bedingungslogik aufweisen. Nach einer Ausführungsform der Erfindung kann die erste Betätigungsvorrichtung 41 ein manueller Betätigungsschalter sein, der im Cockpitbereich des Flugzeugs F angeordnet ist. Die Ansteuerungsvorrichtung 43 kann derart ausgeführt sein, dass diese auf ein Betätigungssignal dann ein Kommandosignal zum Öffnen oder Schließen der ersten und der zweiten Öffnungs- und Schließvorrichtung 61, 71 erzeugt und an diese sendet, wenn vorbestimmte, in der Ansteuerungsvorrichtung 43 abgespeicherte Betriebszustände und insbesondere Bodenzustände gegeben sind, was durch einen Vergleich der von dem Flugsteuerungssystem 44 an die Ansteuerungsvorrichtung 43 gesendeten Daten ermittelt wird. Die Ansteuerungsvorrichtung 43 weist hierzu eine Überprüfungsfunktion auf, die bei Eingang eines Betätigungskommandos von einer Betätigungsvorrichtung 41, 42 prüft, ob die zur Ausführung des jeweiligen Betätigungskommandos zu erfüllenden Bedingungen gegeben sind. Beispielsweise kann eine Bedingung das Gegebensein von Kontakt des Flugzeugs mit dem Boden oder eines sicheren Betriebszustands des Flugzeugs am Boden sein. Diese Bedingung kann alternativ oder zusätzlich durch das Unterschreiten einer maximalen Flughöhe gegeben sein. Optional kann alternativ oder zusätzlich vorgesehen sein, dass die Bedingung das Unterschreiten einer Turbinenrad-Geschwindigkeit der Turbine 11 sein kann, so dass die Bedingung als erfüllt angesehen wird, wenn die Turbinenrad-Geschwindigkeit der Turbine 11 unter einem vorbestimmten Grenzwert liegt. Bei dieser Ausführungsform der Erfindung ist vorgesehen, dass die Turbinenrad-Geschwindigkeit der Turbine 11 von der Flugsteuerungssystem 44 über eine entsprechende funktionale Verbindung zwischen der Turbine 11 und dem Flugsteuerungssystem 44 als Eingangssignal von dem Flugsteuerungssystem 44 an die Ansteuerungsvorrichtung 43 gesendet wird. Dadurch kann sichergestellt werden, dass ein Öffnen oder Schließen der ersten und der zweiten Öffnungs- und Schließvorrichtung 61, 71 tatsächlich nur zu Wartungszwecken oder zur Leistungserzeugung erfolgen kann, wenn die Haupttriebwerke des Flugzeugs nicht laufen.

Die zweite Betätigungsvorrichtung 42 kann insbesondere ein manueller Schalter an einem Wartungsmodul des Flugzeugs oder ein manueller Schalter für Boden- und/oder Betreuungspersonal sein.

Die erste und die zweite Entriegelungsvorrichtung 62, 72 werden jeweils aktiviert, d.h. in einen Zustand gebracht, in dem diese die erste und zweite Abdeckungsvorrichtung 6 bzw. 7 oder die Deckel 16 bzw. 17 entriegeln, wenn die Leistungserzeugungs-Überwachungsvorrichtung 25 feststellt, dass die Leistungsverteilungs-Vorrichtung 20 nicht mehr in der Lage ist, eine minimale Soll-Leistung zu erhalten oder aufzubringen und an die Verbraucher des Flugzeugsystems abzugeben. In diesem Fall sendet die Leistungserzeugungs-Überwachungsvorrichtung 25 an die Öffnungs-Schaltvorrichtung 27 ein Entriegelungskommando oder Entriegelungssignal. Die Öffnungs-Schaltvorrichtung 27 ist derart ausgeführt, dass diese auf Empfang eines solchen Entriegelungskommandos den Aktuator 62b der ersten Entriegelungsvorrichtung 62 und den Aktuator 72b der zweiten Entriegelungsvorrichtung 72 stromlos schaltet oder diesem nur eine relativ geringe Stromstärke zuführt. Die Aktuatoren der ersten und zweiten Entriegelungsvorrichtung 62, 72 sind jeweils als elektromagnetische Entriegelungsvorrichtungen ausgeführt, die die erste Abdeckungsvorrichtung 6 bzw. die zweite Abdeckungsvorrichtung 7 verriegeln, wenn die Aktuatoren 62b, 72b der ersten Abdeckungsvorrichtung 6 bzw. der zweiten Abdeckungsvorrichtung 7 jeweils kein elektrisches Signal erhalten oder diesen nur eine relativ geringe Stromstärke zugeführt wird. Umgekehrt entriegelt die erste und zweite Entriegelungsvorrichtung 62, 72 die erste Abdeckungsvorrichtung 6 bzw. zweite Abdeckungsvorrichtung 7 nur, wenn den Aktuatoren 62b, 72b der ersten Abdeckungsvorrichtung 6 bzw. der zweiten Abdeckungsvorrichtung 7 jeweils ein vorbestimmtes elektrisches Signal zugeführt wird, oder wenn diesen ein Signal zugeführt wird, das eine vorbestimmte Stromstärke übersteigt, mit dem die Aktuatoren 62b, 72b jeweils in ihren Verriegelungszustand gebracht werden. Die relativ geringe Stromstärke zur Verriegelung der Aktuatoren 62b, 72b kann insbesondere so vorgesehen sein, dass diese um mindestens einen vorbestimmten Wert geringer sein muss als die Stromstärke mit der die Aktuatoren 62b, 72b entriegeln. Der vorbestimmte Wert kann insbesondere 30% von der Verriegelungs-Stromstärke oder mehr betragen.

Alternativ dazu kann auch vorgesehen sein, dass das Entriegelungskommando von der Leistungserzeugungs-Überwachungsvorrichtung 25 direkt an die erste und zweite Entriegelungsvorrichtung 62, 72 gesendet wird, die wiederum aufgrund der vorgenannten Bedingungen die Kommandosignale an die Aktuatoren 62b bzw. 72b senden.

Durch diese Ausgestaltung des Leistungsversorgungssystems P können die Abdeckungsvorrichtungen 6, 7 nur dann über die Betätigungsvorrichtungen 41, 42 geöffnet werden, denn dies das Flugsteuerungssystem 44 zulässt. Dies ist je nach Ausführungsform der Erfindung insbesondere im Bodenbetrieb oder bis kurz nach dem Start des Flugzeugs oder gegen Ende der Flugphase der Fall. Andererseits kann aber die erste Abdeckungsvorrichtung 6 und bei einer weiteren Ausführungsform der Erfindung auch die zweite Abdeckungsvorrichtung 7 derart ausgestaltet sein, dass sich diese öffnen, wenn den Aktuatoren 62b, 72b ein Kommandosignal vorbestimmter Stromstärke zugeführt wird.

Hierzu können die Aktuatoren 62b, 72b eine Vorspannungs-Einrichtung aufweisen, mit der die erste Abdeckungsvorrichtungen 16 und /oder die zweite Abdeckungsvorrichtung 17 in ihre offene Stellung vorgespannt sind. Zu diesem Zweck kann alternativ oder zusätzlich auch eine entsprechend dimensionierte pryrotechnische Vorrichtung, die z.B. aus einem Gasgenerator oder einer Sprengvorrichtung gebildet sein kann, an der jeweiligen Abdeckungsvorrichtung 6, 7 oder den Aktuatoren 62b, 72b installiert sein, die jeweils bei einem Entriegelungssignal aktiviert wird und aufgrund dessen die die erste und/oder zweite Entriegelungsvorrichtung 62 bzw. 72 in einen entriegelten Zustand bringen.

Alternativ oder zusätzlich kann die erste Abdeckungsvorrichtung oder der erste Deckel 16 oder auch die zweite Abdeckungsvorrichtung oder der zweite Deckel 17 derart ausgeführt sein, dass die Windkräfte im Flug zumindest die erste Abdeckungsvorrichtung oder den ersten Deckel 16 gegen die Haltekräfte der ersten bzw. zweiten Öffnungs- und Schließvorrichtung 71 in den offenen Zustand drücken.

Nach einer alternativen Ausführungsform der Erfindung kann vorgesehen sein, dass die Öffnungs-Schaltvorrichtung 27 über eine Verbindungsleitung 43a funktional mit der Ansteuerungsvorrichtung 43 in Verbindung steht. Weiterhin ist dabei die Öffnungs-Schaltvorrichtung 27 derart mit einer logischen Funktion oder einer Vergleichsfunktion ausgeführt, dass diese nur dann ein Entriegelungskommando an die erste und zweite Entriegelungsvorrichtung 62, 72 sendet, wenn die Ansteuerungsvorrichtung 43 ein Kommandosignal zum Öffnen oder Schließen der ersten und der zweiten Öffnungs- und Schließvorrichtung 61, 71 erzeugt und an diese sendet oder gesendet hat, so dass auch die beschriebenen Bedingungen für das Senden des Kommandosignals gegeben sind. Auf diese Weise wird die Öffnung der jeweiligen Abdeckungsvorrichtung 6, 17 durch das Öffnen oder Schließen der ersten und der zweiten Öffnungs- und Schließvorrichtung 61, 71 unterstützt.

Bei der Ausführungsform der zweiten Abdeckungsvorrichtung 7, bei der sich der zweite Deckel 17 in einer Weise öffnet, dass in der offenen Stellung des zweiten Deckels 17 die Innenseite 5a desselben der Strömung S zugewandt ist, wird bei der Entriegelung der zweiten Abdeckungsvorrichtung 7 im Fluge diese durch die Windkräfte in ihre offene Stellung bewegt.

Bei einer weiteren erfindungsgemäßen Ausführungsform der Erfindung ist alternativ oder zusätzlich zu einem vorgenannten Ausführungsform der Erfindung die minimale Querschnittsfläche des zweiten Kanalabschnitts K2 geringer als die minimale Querschnittsfläche des ersten Kanalabschnitts K1. Bei einer Ausführungsform der Erfindung mit einer zweiten Abdeckungsvorrichtung 7 für den zweiten Kanalabschnitt K2 wird auf diese Weise die zweite Abdeckungsvorrichtung 7 durch den aufgrund der Öffnung der ersten Abdeckungsvorrichtung 16 im Flug entstehenden Innendruck im Kanal K aufgedrückt.

Zur Feststellung einer Notwendigkeit zusätzlichen Energiebedarfs empfängt die Leistungserzeugungs-Überwachungsvorrichtung 25 von der Leistungsverteilungs-Vorrichtung 20 Leistungskennwerte und insbesondere die zeitabhängigen Leistungsgrößen von Primärleistungserzeugungs-Vorrichtungen 31, 32. Die Leistungserzeugungs-Überwachungsvorrichtung 25 weist eine Überwachungsfunktion auf, die aus den erhaltenen Leistungskennwerten und den Leistungsgrößen von Primärleistungserzeugungs-Vorrichtungen 31, 32 eine notwendige Leistungszufuhr durch die Sicherheits-Leistungserzeugungsvorrichtung 10 ermittelt. Dies erfolgt insbesondere aus einem Vergleich einer Soll-Leistung mit einer von den Primärleistungserzeugungs-Vorrichtungen 31, 32 erbrachten Ist-Leistung.

Zur Überwachung der Verfügbarkeit von Leistung für die Leistungsverteilungs-Vorrichtung 20 kann die Leistungserzeugungs-Überwachungsvorrichtung 25 alternativ oder zusätzlich eine Funktion aufweisen, mit der der Lenzsche-Effekt, also ein spezifischer Spannungsstoß an Generatoren erkannt wird, um eine Leistungseinbuße oder einen Ausfall eines Generators festzustellen. Alternativ oder zusätzlich kann dabei ein vorbestimmter Leistungsverlauf, der für den jeweiligen Generator charakteristisch ist, im Zustand des Übergangs von der Funktionsfähigkeit zum Ausfall des Generators abgespeichert sein und in der Leistungserzeugungs-Überwachungsvorrichtung 25 eine Funktionserkennungsfunktion integriert sein, die den Funktionsverlauf im Falle des Ausfalls mit dem tatsächlich auftretenden Leistungsverlauf vergleicht und ein Entriegelungssignal erzeugt und an die Öffnungs-Schaltvorrichtung 27 sendet, falls auf diese Weise eine Übereinstimmung oder eine Ähnlichkeit zwischen diesen Signalen festgestellt wird.

Bei einer weiteren Ausführungsform der Erfindung wird der zweite Kanalabschnitt K2 nicht durch eine zweite Abdeckungsvorrichtung 7 abgedeckt. Die Figur 2 zeigt eine Ausführungsform der Erfindung, bei der der zweite Kanalabschnitt K2 mit einem Leitungsabschnitt 83 an der Heckspitze H1 des Hecks H des Flugzeugs mit einer Ausmündung 85 ausmündet. Generell kann der zweite Kanalabschnitt K2 mit der Ausmündung 85 an einem Oberflächenabschnitt des Hecks H ausmünden, der in der vom Heck H zur Flugzeugspitze verlaufenden Längsrichtung L des Rumpfs R gesehen hinter der Sicherheits-Leistungserzeugungsvorrichtung 10 gelegen ist.

Bei einer weiteren Ausführungsform der Erfindung kann das Heck H bzw. das Leistungsversorgungs-System P eine im Heck H installierte Hilfsturbine oder Auxillary Power Unit (APU) 90 aufweisen, die zwischen einer Einlassleitung 91 mit einer Einlassöffnung 91 a und einer Auslassleitung 92 gelegen ist. Das erfindungsgemäße Leistungsversorgungs-System P kann ansonsten nach einer der erfindungsgemäßen Ausführungsformen ausgebildet sein. Dabei kann die Auslassleitung 92 innerhalb des Heckbereichs H des Rumpfs R mit dem zweiten Kanalabschnitt K2 mittels eines Kopplungsabschnitts 97 zusammengeführt sein. Die Hilfsturbine oder Auxillary Power Unit APU (Figuren 2 und 3) ist im Heckbereich des Flugzeugs installiert und ist insbesondere für den Bodenbetrieb des Flugzeugs vorgesehen. Die Hilfsturbine oder eine Auxillary Power Unit APU ist dabei insbesondere zum Starten der Triebwerke des Flugzeugs vorgesehen und eingerichtet und weist eine LeistungserzeugungsVorrichtung sowie eine funktionale Verbindung zu den Triebwerken des Flugzeugs zur Übertragung der erzeugten Leistung an diese auf. Die Ausmündung 95 der Auslassleitung 93 aus dem Rumpf R kann insbesondere in der Heckspitze H1 oder seitlich derselben, jedoch in der Längsrichtung L gesehen hinter der Hilfsturbine oder einer Auxillary Power Unit (APU) 90 angeordnet sein.

### Bezugszeichenliste

- F: Flugzeug
- H: Heck des Flugzeugs F
- H1: Heckspitze H1 des Hecks H
- K: Strömungskanal
- K1: ersten Abschnitt
- K2: zweiter Abschnitt
- L: Flugzeuglängsrichtung
- P: Leistungsversorgungssystem
- R: Rumpf
- R1: Rumpfaußenseite
- S: Strömungsrichtung
- S1: Strömung
- S2: ausströmende Luft
- 1: Rumpfschale
- 2: Einmündungsabschnitt
- 3: Ausmündungsabschnitt
- 4: Einmündungsöffnung oder eine erste Öffnung
- 4a: Seite der ersten Öffnung 4
- 5: Ausmündungsöffnung oder eine zweite Öffnung
- 5a: Seite 5a der zweiten Öffnung 5
- 6: erste Abdeckungsvorrichtung
- 7: zweite Abdeckungsvorrichtung
- 8: Drehgelenks
- 9: Drehgelenks
- 10: Sicherheits-Leistungserzeugungsvorrichtung
- 15: elektrische Leitung
- 16: erster Deckel
- 16a: Innenseite
- 17: zweiter Deckel
- 17a: Innenseite
- 17b: Außenseite
- 20: Leistungsverteilungs-Vorrichtung
- 25: Leistungserzeugungs-Überwachungsvorrichtung
- 27: Öffnungs-Schaltvorrichtung
- 30: Primär-Leistungserzeugungssystem
- 31, 32: Primärleistungserzeugungs-Vorrichtungen
- 41, 42: Betätigungsvorrichtungen
- 43: Ansteuerungsvorrichtung
- 44: Flugsteuerungssystem
- 61: erste Öffnungs- und Schließvorrichtung
- 62: erste Entriegelungsvorrichtung
- 62b: Aktuator
- 71: zweite Öffnungs- und Schließvorrichtung
- 72: zweite Entriegelungsvorrichtung
- 72b: Aktuator
- 83: Leitungsabschnitt an der Heckspitze H1
- 85: Ausmündung
- 93: Leitungsabschnitt an der Heckspitze H1
- 90: im Heck H installierte Hilfsturbine oder Auxillary Power Unit (APU)
- 91: Einlassleitung
- 91a: Einlassöffnung
- 92: Auslassleitung
- 93: Auslassleitung
- 95: Ausmündung
- 97: Kopplungsabschnitt

## Patentansprüche

1. Leistungsversorgungs-System (P) zur Integration in ein Flugzeugsystem, aufweisend:
■ eine Sicherheits-Leistungsversorgungsvorrichtung (10), aufweisend: einen zwischen zwei Öffnungen (4, 5, 85, 95) am Rumpf (R) eines Flugzeugs (F) verlaufenden Kanal (K) mit einer in der Flugzeugslängsrichtung (L) gesehen vorderen Öffnung (4) und einer hinteren Öffnung (5), eine in dem Kanal angeordnete Turbine (12) mit einem an dieser angekoppelten Generator (14), eine zwichen einer geschlossenen und einer offenen Stellung bewegbare Abdeckungsvorrichtung (6) zur Abdeckung der vorderen Öffnung (4) in deren geschlossener Stellung und eine Öffnungs- und Schließvorrichtung (61),
■ zumindest eine mit der Öffnungs- und Schließvorrichtung (61) funktional verbundene Betätigungsvorrichtung (41, 42) zur Erzeugung eines Öffnungs- oder Schließsignals für dieselbe,
**dadurch gekennzeichnet, dass**
die Sicherheits-Leistungsversorgungsvorrichtung (10) eine Entriegelungsvorrichtung (62) aufweist, die der Abdeckungsvorrichtung (6) zugeordnet ist und die derart ausgeführt ist, dass diese die Abdeckungsvorrichtung (6) verriegelt, wenn dieser ein Strom mit einer ersten Signalstärke zugeführt wird, und die Abdeckungsvorrichtung (6) entriegelt, wenn dieser ein Strom mit einer zweiten Signalstärke zugeführt wird, wobei die zweite Signalstärke die erste Signalstärke um einen vorbestimmten Wert unterschreitet,
das Leistungsversorgungs-System (P) eine mit einer Leistungserzeugungs-Überwachungsvorrichtung (25) funktional gekoppelte Öffnungs-Schaltvorrichtung (27) aufweist, die mit einer Steuerleitung (62a) mit der Entriegelungsvorrichtung (62) funktional verbunden und die derart ausgeführt ist, dass diese in einem Ausgangszustand die Entriegelungsvorrichtung (62) elektrisch mit einer ersten Signalstärke ansteuert, bei der diese Abdeckungsvorrichtung (6) verriegelt, und dass diese auf ein von der Leistungserzeugungs-Überwachungsvorrichtung (25) empfangenes Leistungsanforderungssignal die Entriegelungsvorrichtung (62) elektrisch mit der zweiten Signalstärke ansteuert, bei der diese die Abdeckungsvorrichtung (6) entriegelt.

2. Leistungsversorgungs-System (P) nach dem Anspruch 1, **dadurch gekennzeichnet, dass** die Entriegelungsvorrichtung (62) elektromagnetisch betätigbar ist.

3. Leistungsversorgungs-System (P) nach dem Anspruch 1 oder 2, **dadurch gekennzeichnet, dass** die Abdeckungsvorrichtung (6) als Deckel (16) ausgeführt ist, der am Rumpf (R) mittels eines Gelenks (8) derart angelenkt ist, dass das Gelenk an der in der Längrichtung (L) des Flugzeugs (F) gesehen hinteren Seite der Öffnung (4) gelegen ist und der Deckel (16) derart ausgeführt ist, dass die Windkräfte im Flug die den Deckel (6) gegen die Haltekräfte der ersten bzw. zweiten Öffnungs- und Schließvorrichtung (61) in den offenen Zustand drücken.

4. Leistungsversorgungs-System (P) nach einem der voranstehenden Ansprüche, **dadurch gekennzeichnet, dass** die zumindest eine Betätigungsvorrichtung (41, 42) manuell betätigbar ausgeführt ist und dass diese zur Erzeugung eines Öffnungs- oder Schließsignals bei der manuellen Betätigung derselben mit jeweils einer Verbindungsleitung (61a) mit den elektromechanisch betätigbaren Öffnungs- und Schließvorrichtungen (61) in Verbindung steht.

5. Leistungsversorgungs-System (P) nach einem der voranstehenden Ansprüche, **dadurch gekennzeichnet, dass** die Entriegelungsvorrichtung (62) eine Vorspanneinrichtung aufweist, die die Abdeckungsvorrichtung (6) in ihre offene Stellung vorspannt, wenn sich diese in ihrem entriegelten Zustand befindet.

6. Leistungsversorgungs-System (P) nach einem der voranstehenden Ansprüche, **dadurch gekennzeichnet, dass** die Entriegelungsvorrichtung (62) eine pyrotechnische Vorrichtung aufweist, die mit der Öffnungs-Schaltvorrichtung (27) über die Steuerleitung (62a) funktional verbunden und derart ausgeführt ist, dass diese ausgelöst wird, wenn diese die Entriegelungsvorrichtung (62) elektrisch mit der zweiten Signalstärke ansteuert.

7. Leistungsversorgungs-System (P) nach dem Anspruch 6, **dadurch gekennzeichnet, dass** die pyrotechnische Vorrichtung einen Gasgenerator oder eine Sprengvorrichtung aufweist.

8. Leistungsversorgungs-System (P) nach einem der voranstehenden Ansprüche, **dadurch gekennzeichnet, dass** die hintere Öffnung (5) des Kanals (K) durch eine Ausmündung (85) am Heck (H) des Flugzeugrumpfs (R) gebildet ist.

9. Leistungsversorgungs-System (P) nach einem der voranstehenden Ansprüche, **dadurch gekennzeichnet, dass** im Heck (H) des Flugzeugs (F) eine Hilfsturbine (90) eingebaut ist, die zwischen einer Einlassleitung (91) mit einer Einlassöffnung (91a) am Rumpf (R) und einer Auslassleitung (92) gelegen ist, und dass die Auslassleitung (92) innerhalb des Heckbereichs (H) des Rumpfs (R) mit dem zweiten Kanalabschnitt (K2) mittels eines Kopplungsabschnitts (97) zusammengeführt ist, so dass die zweite Öffnung (5) des zweiten Kanalabschnitts (K2) die Ausmündung (95) der Auslassleitung (92) ist.

10. Leistungsversorgungs-System (P) nach einem der voranstehenden Ansprüche, **dadurch gekennzeichnet,**
■ **dass** an der hinteren Öffnung (5) eine zweite zwischen einer geschlossenen und einer offenen Stellung bewegbare Abdeckungsvorrichtung (7) zur Abdeckung derselben in der geschlossenen Stellung angeordnet ist, dass der Abdeckungsvorrichtung (7) eine zweite Öffnungs- und Schließvorrichtung (71) und zweite Entriegelungsvorrichtung (72) zugeordnet sind, die der Abdeckungsvorrichtung (7) zugeordnet ist und die derart ausgeführt ist, dass diese die Abdeckungsvorrichtung (7) verriegelt, wenn dieser ein Strom mit einer ersten Stromstärke zugeführt wird, und die Abdeckungsvorrichtung (7) entriegelt, wenn dieser ein Strom mit einer zweiten Stromstärke zugeführt wird, wobei die zweite Signalstärke die erste Signalstärke um mindestens einen vorbestimmten Wert unterschreitet,
■ **dass** das Leistungsversorgungs-System (P) zumindest eine Betätigungsvorrichtung (42) zur Erzeugung eines Öffnungs- oder Schließsignals für die zweite Öffnungs- und Schließvorrichtung (72) aufweist, die der zweiten Abdeckungsvorrichtung (7) zugeordnet ist,
■ **dass** die Öffnungs-Schaltvorrichtung (27) funktional über eine Steuerleitung (72a) mit der zweiten Entriegelungsvorrichtung (72) gekoppelt und derart ausgeführt ist, dass diese in einem Ausgangszustand die zweite Entriegelungsvorrichtung (72) elektrisch mit einer ersten Signalstärke ansteuert, bei der diese Abdeckungsvorrichtung (7) verriegelt, und dass diese auf ein von der Leistungserzeugungs-Überwachungsvorrichtung (25) empfangenes Leistungsanforderungssignal die zweite Entriegelungsvorrichtung (72) elektrisch mit der zweiten Signalstärke ansteuert, bei der diese die Abdeckungsvorrichtung (7) entriegelt.

11. Leistungsversorgungs-System (P) nach dem Anspruch 10, **dadurch gekennzeichnet, dass** die zweite Entriegelungsvorrichtung (72) elektromagnetisch betätigbar ist.

12. Leistungsversorgungs-System (P) nach dem Anspruch 10 oder 11, **dadurch gekennzeichnet, dass** die zweite Abdeckungsvorrichtung (7) einen Deckel (17) aufweist, der mittels eines Drehgelenks (9) derart angeordnet ist, dass der Deckel (17) die zweite Öffnung (5) abdeckt, wenn sich der Deckel (17) in seiner geschlossenen Stellung befindet, und dass das Drehgelenk (9) auf einer Seite gelegen ist, die in der angenommenen Strömungsrichtung (S) der den Rumpf (R) umströmenden Luft gesehen die vordere Seite der Öffnung (5) bildet, so dass in der offenen Stellung des zweiten Deckels (7) die Innenseite (5a) desselben der Strömung (S) abgewandt ist.

13. Leistungsversorgungs-System (P) nach dem Anspruch 11 oder 12, **dadurch gekennzeichnet, dass** die Abdeckungsvorrichtung (6) als Deckel (16) ausgeführt ist, der am Rumpf (R) mittels eines Gelenks (8) derart angelenkt ist, dass das Gelenk an der in der Längrichtung (L) des Flugzeugs (F) gesehen hinteren Seite der Öffnung (4) gelegen ist und der Deckel (16) derart ausgeführt ist, dass die Windkräfte im Flug die den Deckel (6) gegen die Haltekräfte der zweiten Öffnungs- und Schließvorrichtung (71) in den offenen Zustand drücken.

14. Leistungsversorgungs-System (P) nach einem der voranstehenden Ansprüche, **dadurch gekennzeichnet, dass** die zumindest eine Betätigungsvorrichtung (41, 42) manuell betätigbar ausgeführt ist und dass diese zur Erzeugung eines Öffnungs- oder Schließsignals bei der manuellen Betätigung derselben mit einer Verbindungsleitung (71a) mit der zweiten Öffnungs- und Schließvorrichtung (71) in Verbindung steht.

## Claims

1. A power generation system (P) for integration into an aircraft system, comprising:
■ a secondary power supply device (10), comprising: a duct (K) running between two openings (4; 5, 85, 95) on the fuselage (R) of the aircraft (F), with a forward opening (4) and a rearward opening (5), as seen in the aircraft longitudinal direction (L), a turbine (12) arranged in the duct (K) with a generator (14) coupled to the turbine, a covering device (6), movable between a closed and an open position for purposes of covering the forward opening (4) in its closed position, an opening and closing device (61),
■ at least one actuation device (41, 42) that is functionally connected with the opening and closing device (61) for purposes of generating an opening or closing signal for the same,
**characterised in that**
the secondary power supply device (10) comprises an unlocking device (62) which is assigned to the covering device (6) and which is embodied such that it locks the unlocking device (62) when the same is provided with a current with a first signal strength, and that it unlocks the covering device (6) when the same is provided with a current with a second signal strength, wherein the second signal strength falls below the first signal strength by a predetermined value,
the power generation system (P) comprises an opening function switching device (27) that is functionally coupled with a power generation monitoring device (25), which opening function switching device is functionally connected via a control cable (62a) with the unlocking device (62), and which is embodied such that in an initial state it activates the unlocking device (62) electrically with a first signal strength, with which the latter locks the covering device (6), and that on receipt of a power requirement signal from the power generation monitoring device (25) it activates the unlocking device (62) electrically with the second signal strength, with which the latter unlocks the covering device (6).

2. The power generation system (P) in accordance with Claim 1, **characterised in that**, the unlocking device (62) can be actuated electromagnetically.

3. The power generation system (P) in accordance with Claim 1 or 2, **characterised in that**, the covering device (6) is embodied as a cover (16), which is articulated on the fuselage (R) by means of an articulation (8) such that the articulation is positioned on the rearward side of the opening (4) as seen in the longitudinal direction (L) of the aircraft (F), and the cover (16) is embodied such that the wind forces in flight push the cover (6) against the retention forces of the first or second opening and closing device (61) respectively into the open state.

4. The power generation system (P) in accordance with one of the preceding claims, **characterised in that**, the at least one actuation device (41, 42) is embodied such that it can be actuated manually, and that this, for purposes of generating an opening or closing signal with manual actuation of the same, is connected in each case via a connecting cable (61 a) with the electromechanically actuable opening and closing devices (61).

5. The power generation system (P) in accordance with one of the preceding claims, **characterised in that**, the unlocking device (62) has a preload unit, which preloads the covering device (6) into its open position, if the latter is located in its unlocked state.

6. The power generation system (P) in accordance with one of the preceding claims, **characterised in that**, the unlocking device (62) has a pyrotechnic device, which is functionally connected via the control cable (62a) with the opening function switching unit (27), and is embodied such that the pyrotechnic device is triggered if the opening function switching unit activates the unlocking device (62) electrically with the second signal strength.

7. The power generation system (P) in accordance with Claim 6, **characterised in that**, the pyrotechnic device has a gas generator or an explosive device.

8. The power generation system (P) in accordance with one of the preceding claims, **characterised in that**, the rearward opening (5) of the duct (K) is constituted in terms of an outlet opening (85) on the rear section (H) of the aircraft fuselage (R).

9. The power generation system (P) in accordance with one of the preceding claims, **characterised in that**, an auxiliary turbine (90) is installed in the rear section (H) of the aircraft (F), which is positioned between an inlet duct (91) with an inlet opening (91 a) on the fuselage (F) and an outlet duct (92), and that the outlet duct (92) within the rear section (H) of the fuselage (F) is joined with the second duct section (K2) by means of a coupling section (97), so that the second opening (5) of the second duct section (K2) is the outlet opening (95) of the outlet duct (92).

10. The power generation system (P) in accordance with one of the preceding claims, **characterised in that**,
■ that on the rearward opening (5) a second covering device (7), movable between a closed and an open position is arranged for purposes of covering the same in the closed position; that a second opening and closing device (71) and a second unlocking device (72) are assigned to the covering device (7), the unlocking device being assigned to the covering device (7) and embodied such that this locks the covering device (7), if a current with a first signal strength is supplied to the unlocking device, and unlocks the covering device (7), if a current with a second signal strength is supplied to the unlocking device, wherein the second signal strength is less than the first signal strength by at least a predetermined value,
■ that the power supply system (P) has at least one actuation device (42) for purposes of generating an opening or closing signal for the second opening and closing device (72), which is assigned to the second covering device (7).
■ that the opening function switching device (27) is functionally coupled via a control cable (72a) with the second unlocking device (72), and is embodied such that in an initial state it activates the second unlocking device (72) electrically with a first signal strength, with which the latter locks the covering device (7), and that on receipt of a power requirement signal from the power generation monitoring device (25) it activates the second unlocking device (72) electrically with the second signal strength, with which the latter unlocks the covering device (7).

11. The power generation system (P) in accordance with Claim 10, **characterised in that**, the second unlocking device (72) can be actuated electromagnetically.

12. The power generation system (P) in accordance with Claim 10 or 11, **characterised in that**, the second covering device (7) comprises a cover (17), which by means of a rotational articulation (9) is arranged such that the cover (17) covers the second opening (5), if the cover (17) is located in its closed position, and that the rotational articulation (9) is positioned on a side, which as seen in the presumed flow direction (S) of the air flowing around the fuselage (F) forms the forward side of the opening (5), so that in the open position of the second cover (7) the inner face (5a) of the same is facing away from the flow (S).

13. The power generation system (P) in accordance with Claim 11 or 12, **characterised in that**, the covering device (6) is embodied as a cover (16), which is articulated on the fuselage (R) by means of an articulation (8) such that the articulation is positioned on the rearward side of the opening (4) as seen in the longitudinal direction (L) of the aircraft (F), and the cover (16) is embodied such that the wind forces in flight push the cover (6) against the retention forces of the second opening and closing device (71) into the open state.

14. The power generation system (P) in accordance with one of the preceding claims, **characterised in that**, the at least one actuation device (41, 42) is embodied such that it can be actuated manually, and that this, for purposes of generating an opening or closing signal, with manual actuation of the same, is connected via a connecting cable (71 a) with the second opening and closing device (71).

## Revendications

1. Système d'alimentation en énergie (P) destiné à être intégré dans un système d'avion, présentant :
un dispositif d'alimentation en énergie de sécurité (10) présentant un canal (K) s'étendant entre deux ouvertures (4, 5, 85, 95) sur la carlingue (R) d'un avion (F), qui comprend une ouverture (4) avant et une ouverture arrière (5), vu dans le sens longitudinal de l'avion (L), une turbine (12) disposée dans le canal comprenant un générateur (14) couplé à celle-ci, un dispositif de recouvrement (6) mobile entre une position fermée et ouverte pour recouvrir l'ouverture avant (4) dans sa position fermée et un dispositif d'ouverture et de fermeture (61),
au moins un dispositif d'actionnement (41, 42) relié de manière fonctionnelle au dispositif d'ouverture et de fermeture (61) pour produire un signal d'ouverture ou de fermeture pour celui-ci,
**caractérisé en ce que**
le dispositif d'alimentation en énergie de sécurité (10) présente un dispositif de déverrouillage (62) qui est attribué au dispositif de recouvrement (6) et qui est ainsi conçu que celui-ci verrouille le dispositif de recouvrement (6) lorsqu'un courant avec une première puissance de signal lui est amené, et déverrouille le dispositif de recouvrement (6) lorsqu'un courant avec une deuxième puissance de signal lui est amené, sachant que la deuxième puissance de signal est inférieure d'une valeur prédéterminée à la première puissance de signal,
le système d'alimentation en énergie (P) présente, couplé de manière fonctionnelle à un dispositif de surveillance de la production d'énergie (25), un dispositif de commutation d'ouverture (27) qui est relié de manière fonctionnelle au dispositif de déverrouillage (62) par une ligne de commande (62a) et qui est ainsi conçu que celui-ci commande dans un état de départ le dispositif de déverrouillage (62) de manière électrique avec une première puissance de signal avec laquelle celui-ci verrouille le dispositif de recouvrement (6), et que celui-ci, à un signal de demande d'énergie reçu du dispositif de surveillance de la production d'énergie (25), commande le dispositif de déverrouillage (62) de manière électrique avec la deuxième puissance de signal, avec laquelle celui-ci déverrouille le dispositif de recouvrement (6).

2. Système d'alimentation en énergie (P) selon la revendication 1, **caractérisé en ce que** le dispositif de déverrouillage (62) peut être actionné de manière électromagnétique.

3. Système d'alimentation en énergie (P) selon la revendication 1 ou 2, **caractérisé en ce que** le dispositif de recouvrement (6) est conçu en tant que capot (16) ainsi articulé sur la carlingue (R) via une articulation (8) que l'articulation repose sur le côté arrière de l'ouverture (4), vu dans le sens longitudinal (L) de l'avion (F), et le capot (16) est ainsi conçu que les forces du vent en vol appuient le capot (6) dans l'état ouvert contre les forces de retenue du premier, respectivement, deuxième dispositif d'ouverture et de fermeture (61).

4. Système d'alimentation en énergie (P) selon l'une des revendications précédentes, **caractérisé en ce que** l'au moins un dispositif d'actionnement (41, 42) est conçu pour être actionné manuellement et que celui-ci, pour produire un signal d'ouverture ou de fermeture lors de l'actionnement manuel de celui-ci, est en liaison par respectivement une ligne de liaison (61a) avec les dispositifs d'ouverture et de fermeture (61) pouvant être actionnés électro-mécaniquement.

5. Système d'alimentation en énergie (P) selon l'une des revendications précédentes, **caractérisé en ce que** le dispositif de déverrouillage (62) présente un dispositif de précontrainte qui précontraint le dispositif de recouvrement (6) dans une position ouverte lorsque celui-ci se trouve dans son état déverrouillé.

6. Système d'alimentation en énergie (P) selon l'une des revendications précédentes, **caractérisé en ce que** le dispositif de déverrouillage (62) présente un dispositif pyrotechnique qui est relié de manière fonctionnelle au dispositif de commutation d'ouverture (27) via la ligne de commande (62a) et qui est ainsi conçu que celui-ci est déclenché lorsque celui-ci commande le dispositif de déverrouillage (62) avec la deuxième puissance de signal.

7. Système d'alimentation en énergie (P) selon la revendication 6, **caractérisé en ce que** le dispositif pyrotechnique présente un générateur de gaz ou un dispositif explosif.

8. Système d'alimentation en énergie (P) selon l'une des revendications précédentes, **caractérisé en ce que** l'ouverture arrière (5) du canal (K) est formée par une sortie (85) sur la queue (H) de la carlingue de l'avion (R).

9. Système d'alimentation en énergie (P) selon l'une des revendications précédentes, **caractérisé en ce qu'**à l'arrière (R) de l'avion (F), une turbine auxiliaire (90) est montée, laquelle est disposée entre une ligne d'admission (91) avec une ouverture d'admission (91a) sur la carlingue (R) et une ligne d'évacuation (92), et que la ligne d'évacuation (92) est dirigée conjointement à l'intérieur de la zone de queue (H) de la carlingue (R) avec la deuxième section de canal (K2) via une section de couplage (97), de façon à ce que la deuxième ouverture (5) de la deuxième section de canal (K2) soit la sortie (95) de la ligne d'évacuation (92).

10. Système d'alimentation en énergie (P) selon l'une des revendications précédentes, **caractérisé en ce que**
- sur l'ouverture arrière (5) est disposé un deuxième dispositif de recouvrement (7) mobile entre une position fermée et ouverte pour recouvrir celle-ci dans la position fermée, qu'au dispositif de recouvrement (7) sont attribués un deuxième dispositif d'ouverture et de fermeture (71) et un deuxième dispositif de déverrouillage (72) qui est attribué au dispositif de recouvrement (7) et qui est ainsi conçu que celui-ci verrouille le dispositif de recouvrement (7) lorsqu'un courant avec une première puissance de signal lui est amené, et déverrouille le dispositif de recouvrement (7) lorsqu'un courant avec une deuxième puissance de signal lui est amené, sachant que la deuxième puissance de signal est inférieure d'au moins une valeur prédéterminée à la première puissance de signal,
- le système d'alimentation en énergie (P) présente au moins un dispositif d'actionnement (42) pour produire un signal d'ouverture ou de fermeture pour le deuxième dispositif d'ouverture et de fermeture (71) attribué au deuxième dispositif de recouvrement (7),
- le dispositif de commutation d'ouverture (27) est relié de manière fonctionnelle au deuxième dispositif de déverrouillage (72) par une ligne de commande (72a) et est ainsi conçu que celui-ci commande dans un état de départ le deuxième dispositif de déverrouillage (72) de manière électrique avec une première puissance de signal avec laquelle celui-ci verrouille le dispositif de recouvrement (7), et que celui-ci, à un signal de demande d'énergie reçu du dispositif de surveillance de la production d'énergie (25), commande le deuxième dispositif de déverrouillage (72) de manière électrique avec la deuxième puissance de signal, avec laquelle celui-ci déverrouille le dispositif de recouvrement (7).

11. Système d'alimentation en énergie (P) selon la revendication 10, **caractérisé en ce que** le deuxième dispositif de déverrouillage (72) peut être actionné de manière électromagnétique.

12. Système d'alimentation en énergie (P) selon la revendication 10 ou 11, **caractérisé en ce que** le deuxième dispositif de recouvrement (7) présente un capot (17) qui est ainsi disposé via une articulation rotative (9) que le capot (17) recouvre la deuxième ouverture (5) lorsque le capot (17) se trouve dans sa position fermée, et **en ce que** l'articulation rotative (9) est placée sur un côté qui, vu dans le sens d'écoulement considéré (S) de l'air circulant autour de la carlingue (R), forme le côté avant de l'ouverture (5), de façon à ce que dans la position d'ouverture du deuxième capot (7), la face intérieure (5a) de celui-ci soit détournée de l'écoulement (S).

13. Système d'alimentation en énergie (P) selon la revendication 11 ou 12, **caractérisé en ce que** le dispositif de recouvrement (6) est conçu en tant que capot (16) ainsi articulé sur la carlingue (R) via une articulation (8) que l'articulation repose sur le côté arrière de l'ouverture (4), vu dans le sens longitudinal (L) de l'avion (F), et le capot (16) est ainsi conçu que les forces du vent en vol appuient le capot (6) dans l'état ouvert contre les forces de retenue du deuxième dispositif d'ouverture et de fermeture (71).

14. Système d'alimentation en énergie (P) selon l'une des revendications précédentes, **caractérisé en ce que** l'au moins un dispositif d'actionnement (41, 42) est conçu pour être actionné manuellement et que celui-ci, pour produire un signal d'ouverture ou de fermeture lors de l'actionnement manuel de celui-ci, est en liaison par respectivement une ligne de liaison (71a), avec le deuxième dispositif d'ouverture et de fermeture (71).
